# EUROPÄISCHE PATENTSCHRIFT

(11) **EP 1 879 777 B1**
(45) Veröffentlichungstag und Bekanntmachung des Hinweises auf die Patenterteilung: **13.02.2013**
(21) Anmeldenummer: 06724465.7
(22) Anmeldetag: 20.04.2006
(51) Int. Cl.: B60T 10/02

(54) **VERFAHREN ZUR BREMSKENNLINIENEINSTELLUNG EINES RETARDERS FÜR EIN KRAFTFAHRZEUG**
METHOD FOR ADJUSTING THE BRAKING CHARACTERISTIC OF A RETARDER FOR A MOTOR VEHICLE
PROCEDE D'AJUSTEMENT D'UNE COURBE CARACTERISTIQUE DE FREINAGE POUR UN RALENTISSEUR DE VEHICULE A MOTEUR

(30) Priorität: 11.05.2005 DE 102005021718
(43) Veröffentlichungstag der Anmeldung: 23.01.2008
(73) Patentinhaber: ZF Friedrichshafen AG, 88038 Friedrichshafen (DE)
(72) Erfinder: REISCH, Bernhard, 88316 Isny (DE); SCHMIDTNER, Peter, 88131 Lindau (DE)
(86) Internationale Anmeldenummer: PCT/EP2006/003636
(87) Internationale Veröffentlichungsnummer: WO 2006/119849

(56) Entgegenhaltungen:
- WO-A-2006/037562
- DE-A1- 10 141 794
- DE-C1- 19 853 830
- US-A- 6 090 010

## Beschreibung

Die vorliegende Erfindung betrifft ein Verfahren zur Bremskennlinieneinstellung eines Retarders für ein Kraftfahrzeug gemäß dem Oberbegriff des Patentanspruchs 1.

Neben den Betriebsbremsen eines Fahrzeugs, insbesondere eines Nutzfahrzeugs, die im Regelfall einem Verschleiß unterliegende Reibungsbremsen sind, werden zusätzliche Verzögerungseinrichtungen mehr und mehr auch vom Gesetzgeber gefordert und von den Fahrzeugherstellern angeboten.

Derartige verschleißfreie zusätzliche Verzögerungseinrichtungen in Form von Retardern und Motorbremsen können auch dazu verwendet werden, die Fahrzeuggeschwindigkeit im Gefälle konstant zu halten.

Zu den Retardern werden sowohl zusätzlich am Getriebe angeordnete hydrodynamische, hydrostatische oder elektrodynamische Bremseinrichtungen gezählt, sowie auch Systeme, die in Form eines "Intarders" innerhalb des Getriebegehäuses vorgesehen sind.

Retarder werden bei Nutzfahrzeugen vor allem eingesetzt, um die beispielsweise bei Bremsung aus hoher Fahrgeschwindigkeit anfallende kinetische Bremsenergie aufzunehmen und in Wärme umzusetzen, sind aber auch für geforderte Dauerbremsleistungen gut geeignet, beispielsweise bei lang andauernder Bergabfahrt.

Bei hydrodynamischen Retardern wird die Strömungsenergie einer Flüssigkeit zum Bremsen benutzt, wobei das physikalische Wirkprinzip dem einer hydrodynamischen Kupplung mit feststehender Turbine entspricht. Demnach weist ein hydrodynamischer Retarder einen sich im Leistungsfluss befindlichen Rotor und einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl mitnimmt, das sich am Stator abstützt, wodurch eine Bremswirkung auf die Rotorwelle erzeugt wird.

Ein Beispiel einer Bremsanlage mit einem hydrodynamischen Retarder ist in der DE 198 53 830 C1 beschrieben. Der hydrodynamische Retarder weist dabei einen Rotor und einen Stator auf, die ihrerseits einen Arbeitsraum miteinander bilden, sowie eine Kühleinrichtung zum Kühlen des Arbeitsmediums, einen Vorratsbehälter zur Aufnahme des Arbeitsmediums und eine Steuereinrichtung, wobei Retarder und Kühleinrichtung im Bremsbetrieb in Sinne eines Kreislaufes vom Arbeitsmedium durchströmt werden.

Aus der WO 2006/037562 A1 ist ein Verfahren zur Abstimmung einer die Betriebsweise einer hydrodynamischen Komponente charakterisierenden Ist-Kennlinie oder Kennfeldes an eine die Betriebsweise der hydrodynamischen Komponente charakterisierende Soll- Kennlinie oder Kennfeldes bei deren Endabnahme bekannt. Bei dem Verfahren wird in einer der hydrodynamischen Komponente zugeordneten beschreib- und lesbaren Speichereinheit eine die gewünschte Betriebsweise beschreibende Soll-Kennline oder ein Soll-Kennfeld der hydrodynamischen Komponente hinterlegt, wobei jedem Betriebspunkt eine Soll-Stellgröße zugeordnet ist. Bei dem Verfahren wird aus den die einzelnen Betriebszustände charakterisierenden Betriebsparametern die aktuelle Ist-Kennlinie ermittelt und für jeden Betriebspunkt mit der vorgegebenen Soll-Kennlinie oder dem Soll-Kennfeld verglichen. Bei Abweichung außerhalb eines vorgebbaren Toleranzbereiches wird eine Korrektur der Soll-Stellgröße für den jeweiligen Betriebspunkt vorgenommen. Bei dem Verfahren wird bei Nichtvorliegen einer Abweichung der aktuelle Sollwert als neuer Sollwert gesetzt und in die Speichereinheit als Soll-Stellgröße eingelesen.

Aus der DE 101 41 794 A1 der Anmelderin ist ein hydrodynamischer Retarder bekannt, der zur Steuerung des Retarders einen Kreislauf aufweist, welcher eine Hydraulikpumpe, einen Wärmetauscher, ein Ventil und eine Steuer- und Regeleinheit umfasst, wobei des Fördervolumen der Pumpe derart verstellbar ist, dass der Volumenstrom unabhängig von der Fahrzeuggeschwindigkeit bzw. Gelenkwellendrehzahl oder Retarderdrehzahl einstellbar ist.

Das Bremsmoment hydrodynamischer Retarder wird üblicherweise dadurch eingestellt, dass im Retarderraum ein entsprechender Druck eingestellt wird, der über eine Steuer- oder Regeleinheit vorgegeben wird. Der Zusammenhang zwischen Stellgröße und Bremsmoment wird hierbei normalerweise über ein Kennfeld hergestellt. Das Verhältnis von vorgegebenem Stelldruck und dem daraus resultierenden Bremsmoment ist jedoch nicht immer konstant, so dass Differenzen zwischen dem angeforderten Sollmoment und dem effektiven Istmoment entstehen.

Die Ursache für diese Abweichung liegt vor allem in der Qualität der Beschaufelungen des Retarders, den Toleranzen der ölführenden Gehäuse und den Toleranzen der mechanischen Stellglieder, wie beispielsweise der Aktuatoren, der Regelkolben, der Federelemente etc.

Da Retarder zunehmend im Rahmen eines Bremsenmanagements zusätzlich zu Betriebsbremsen eines Fahrzeugs eingesetzt werden, ist es erforderlich, das Bremsmoment des Retarders als Funktion der Stellgröße in möglichst engen Toleranzgrenzen zu halten.

Um die Abweichung des Bremsmoments vom Sollmoment zu minimieren, wird nach dem Stand der Technik das Bremsmoment des Retarders an einem Serienprüfstand ermittelt. Entsprechend der Abweichung des gemessenen Istmoments zum spezifizierten Sollmoment wird die Bremskennlinie des Retarders korrigiert.

Hierbei sind u.a. folgende Möglichkeiten bekannt, um die Abweichung des Bremsmoments am Serienprüfstand zu minimieren:
- Messen des Bremsmoments am Prüfstand und Korrektur des Bremsmoments mittels hardwaremäßiger Einstellvorrichtung, z. B. über eine Einstellschraube, oder
- Messen des Bremsmoments am Prüfstand und alternative Auswahl eines der in der elektronischen Steuerung abgelegten Kennfelder über beispielsweise Widerstände oder Kodierschalter.

Des weiteren ist bekannt, während des Fahrbetriebs das Bremsmoment im Retarder zu messen und die Kennlinie anhand der Messung zu korrigieren; eine weitere Möglichkeit besteht darin, das Bremsmoment mittels eines geeigneten Drehmomentsensors zu regeln.

Die aus dem Stand der Technik bekannten Lösungen zur Minimierung der Abweichung des Bremsmoments weisen den Nachteil auf, dass einerseits die Kennfelder nur als Ganzes verschoben werden können, wobei die in der elektronischen Steuerung zur Auswahl stehenden Kennfelder nur eine Annäherung an den Sollzustand sind. Ferner sind teure Geräte zur Prüfung und Einstellung des Bremsmoments erforderlich.

Andererseits sind für eine Messung des Bremsmoments während des Fahrbetriebs zusätzliche Sensoren notwendig, was in einer Erhöhung der Herstellungs- und Montagekosten resultiert.

Der vorliegenden Erfindung liegt die Aufgabe zugrunde, ein Verfahren zur Bremskennlinieneinstellung eines Retarders anzugeben, welches die Abweichung des Bremsmoments vom Sollmoment minimiert und bei dessen Durchführung die erwähnten Nachteile des Standes der Technik vermieden werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird im Rahmen des Verfahrens zur Bremskennlinieneinstellung eines Retarders vorgeschlagen, in der Steuer- bzw. Regeleinheit des Retarders ein Kennfeld bzw. eine Bremskennlinie abzulegen, die den Zusammenhang zwischen Stellgröße und Bremsmoment darstellt. Gemäß der Erfindung weist dieses Kennfeld mehrere Stützpunkte auf, an denen die Zuordnung von Stellgröße und Bremsmoment durch einzelne Korrekturwerte verändert werden kann.

Erfindungsgemäß wird am Serien-Abnahmeprüfstand für jeden Retarder an definierten Punkten ein Vergleich zwischen Sollvorgabe für das Bremsmoment und Istwert durchgeführt, wobei die durch einzelne Korrekturwerte veränderbaren Stützpunkte anhand eines Soll-Ist-Vergleichs so weit angehoben oder abgesenkt werden, dass der Istwert innerhalb eines vorher definierten Toleranzbandes liegt.

Die auf diese Weise ermittelten Korrekturwerte werden in der Steuer- oder Regeleinheit in geeigneter Weise dauerhaft abgelegt, wobei eine eindeutige Zuordnung von Regeleinheit und Retarder erforderlich ist. Anhand der Korrekturwerte ergibt sich ein Korrekturkennfeld, dessen Zwischenwerte durch Interpolation ermittelt werden können.

Mit steigender Anzahl der veränderbaren Stützpunkte bzw. mit der Einengung des dazugehörigen Toleranzbandes wird die Genauigkeit des erzeugten Istmoments weiter erhöht. Andererseits bedeutet eine Steigerung der Genauigkeit mehr Zeit- und damit Kostenaufwand bei der Einstellung am Serien-Abnahmeprüfstand, so dass ein geeigneter Kompromiss zwischen hoher Genauigkeit und dem damit verbundenen Aufwand gewählt werden sollte.

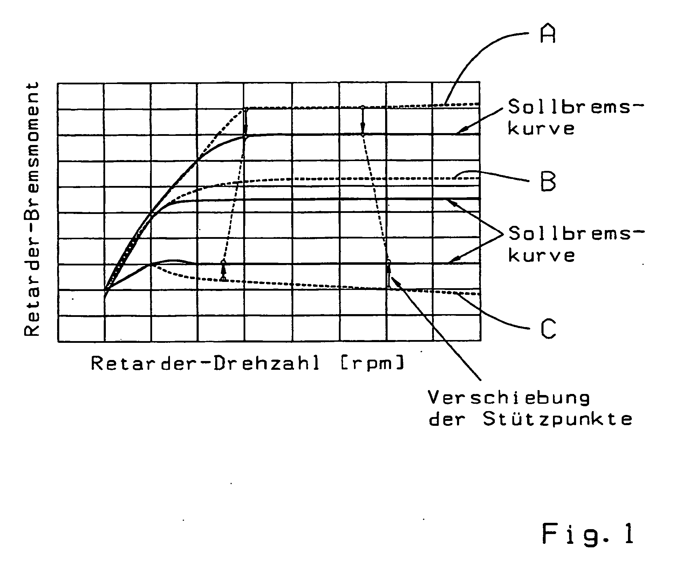

Die Erfindung wird im Folgenden anhand der beigefügten Figur beispielhaft näher erläutert.

In der Figur sind drei Bremskennlinien A, B, C (d.h. das Bremsmoment des Retarders als Funktion der Retarder-Drehzahl) für einen Retarder als gestrichelte Linien sowie die entsprechenden Sollbremskurven als durchgezogene Linien dargestellt.

Gemäß der Erfindung wird in der Steuer- bzw. Regeleinheit des Retarders ein Kennfeld bzw. eine Bremskennlinie abgelegt, die den Zusammenhang zwischen der Stellgröße und dem Bremsmoment darstellt, wobei das Kennfeld bzw. die Bremskennlinie mehrere Stützpunkte aufweist, an denen die Zuordnung von Stellgröße und Bremsmoment durch einzelne Korrekturwerte verändert werden kann. In der Figur sind für jede Bremskennlinie beispielhaft zwei Stützpunkte vorgesehen.

Am Serien-Abnahmeprüfstand wird für jeden Retarder an diesen Punkten ein Vergleich zwischen Sollvorgabe (durchgezogene Linien in der Figur) und Istwert durchgeführt, wobei die durch einzelne Korrekturwerte veränderbaren Stützpunkte anhand des durchgeführten Soll-Ist-Vergleichs so weit angehoben oder abgesenkt werden, dass der Istwert innerhalb eines vorher definierten Toleranzbandes liegt.

Diese Vorgehensweise ist in der Figur durch die Pfeile veranschaulicht, welche die Verschiebung der Werte der Stützpunkte zeigen. Anhand der korrigierten Werte für die Stützpunkte wird eine korrigierte Bremskennlinie ermittelt, deren Zwischenwerte durch Interpolation ermittelt werden, und die Korrekturwerte werden in der Steuer- oder Regeleinheit des Retarders abgelegt.

Durch die erfindungsgemäße Konzeption, wonach jeder einzelne Retarder am Serien-Abnahmeprüfstand in mehreren Punkten abgeglichen wird, kann das Istmoment des Retarders durch seine elektronische Steuerungs- oder Regelungseinrichtung sehr genau eingestellt werden, ohne die Notwendigkeit, weitere zusätzliche Sensoren vorzusehen.

## Patentansprüche

1. Verfahren zur Bremskennlinieneinstellung eines Retarders für ein Kraftfahrzeug, wobei in der Steuer- bzw. Regeleinheit des Retarders ein Kennfeld bzw. eine Bremskennlinie abgelegt wird, die den Zusammenhang zwischen Stellgröße und Bremsmoment darstellt, wobei die Bremskennlinie mehrere Stützpunkte aufweist und am Serien-Abnahmeprüfstand für jeden Retarder an definierten Punkten ein Vergleich zwischen Sollvorgabe für das Bremsmoment und Istwert durchgeführt wird, **dadurch gekennzeichnet, dass** beim Vergleich zwischen Sollvorgabe und Istwert an den definierten Punkten einzelne Korrekturwerte ermittelt werden und die Korrekturwerte in der Steuer- oder Regeleinheit des Retarders abgelegt werden, durch die die Zuordnung von Stellgröße und Bremsmoment verändert werden kann, und wobei die durch einzelne Korrekturwerte veränderbaren Stützpunkte anhand des Soll-Ist-Vergleichs so weit angehoben oder abgesenkt werden, dass der Istwert innerhalb eines vorher definierten Toleranzbandes liegt.

2. Verfahren zur Bremskennlinieneinstellung eines Retarders für ein Kraftfahrzeug nach Anspruch 1, **dadurch gekennzeichnet, dass** anhand der korrigierten Werte für die Stützpunkte, deren Zwischenwerte durch Interpolation ermittelt werden, eine korrigierte Bremskennlinie ermittelt wird.

3. Verfahren zur Bremskennlinieneinstellung eines Retarders für ein Kraftfahrzeug nach Anspruch 1 oder 2, **dadurch gekennzeichnet, dass** die Genauigkeit der Bremskennlinieneinstellung mit steigender Anzahl der Stützpunkte erhöht werden kann.

4. Verfahren zur Bremskennlinieneinstellung eines Retarders für ein Kraftfahrzeug nach Anspruch 1 oder 2, **dadurch gekennzeichnet, dass** Korrekturwerte zu je zwei Stützpunkten einer Bremskennlinie (A) mit hohem Bremsmoment und einer Bremskennlinie (C) mit niedrigem Bremsmoment ermittelt und abgespeichert werden.

## Claims

1. Method for adjusting the braking characteristic curve of a retarder for a motor vehicle, wherein a characteristic diagram or a braking characteristic curve which represents the relationship between the manipulated variable and the braking torque is stored in the open-loop or closed-loop control unit of the retarder, wherein the braking characteristic curve has a plurality of support points and a comparison between the setpoint predefined value for the braking torque and the actual value is carried out at defined points at the series acceptance test bench for each retarder, **characterized in that** during the comparison between the setpoint predefined value and the actual value at the defined points individual correction values are determined and the correction values are stored in the open-loop or closed-loop control unit of the retarder, by means of which correction values the assignment of the manipulated variable and the braking torque can be changed, and wherein the support points which can be changed by individual correction values are increased or decreased on the basis of the setpoint/actual comparison to such an extent that the actual value is within a previously defined tolerance band.

2. Method for adjusting a braking characteristic curve of a retarder for a motor vehicle according to Claim 1, **characterized in that** a corrected braking characteristic curve is determined on the basis of the corrected values for the support points whose intermediate values are determined by interpolation.

3. Method for adjusting a braking characteristic curve of a retarder for a motor vehicle according to Claim 1 or 2, **characterized in that** the accuracy of the braking characteristic curve adjustment can be increased as the number of support points increases.

4. Method for adjusting a braking characteristic curve of a retarder for a motor vehicle according to Claim 1 or 2, **characterized in that** correction values are determined for, in each case, two support points of a braking characteristic curve (A) with a high braking torque and a braking characteristic curve (C) with a low braking torque, and are stored.

## Revendications

1. Procédé d'ajustement d'une courbe caractéristique de freinage d'un ralentisseur de véhicule automobile, dans lequel, dans l'unité de commande ou de régulation du ralentisseur, est saisi un champ caractéristique ou une courbe caractéristique de freinage, qui établit le rapport entre la grandeur de réglage et le couple de freinage, la courbe caractéristique de freinage présentant plusieurs points de référence et une comparaison entre une valeur prédéfinie de consigne pour le couple de freinage et une valeur réelle étant réalisée en des points définis sur un banc d'essai d'acceptation de série pour chaque ralentisseur, **caractérisé en ce que** lors de la comparaison entre la valeur prédéfinie de consigne et la valeur réelle aux points définis, des valeurs de correction individuelles sont déterminées et les valeurs de correction sont saisies dans l'unité de commande ou de régulation, lesquelles permettent de modifier l'affectation de la grandeur de réglage et du couple de freinage, et les points de référence, qui peuvent être modifiés par des valeurs de correction individuelles, étant augmentés ou abaissés à l'aide de la comparaison valeur réelle - valeur de consigne dans une mesure telle que la valeur réelle se situe à l'intérieur d'une bande de tolérance définie préalablement.

2. Procédé d'ajustement d'une courbe caractéristique de freinage d'un ralentisseur de véhicule automobile selon la revendication 1, **caractérisé en ce qu'**une courbe caractéristique corrigée est déterminée à l'aide des valeurs corrigées pour les points de référence, dont les valeurs intermédiaires sont déterminées par interpolation.

3. Procédé d'ajustement d'une courbe caractéristique de freinage d'un ralentisseur de véhicule automobile selon la revendication 1 ou 2, **caractérisé en ce que** la précision de l'ajustement de la courbe caractéristique de freinage peut être augmentée avec un nombre croissant de points de référence.

4. Procédé d'ajustement d'une courbe caractéristique de freinage d'un ralentisseur de véhicule automobile selon la revendication 1 ou 2, **caractérisé en ce que** des valeurs de correction sont déterminées et mémorisées pour deux points de référence respectifs d'une courbe caractéristique de freinage (A) avec un couple de freinage élevé et d'une courbe caractéristique de freinage (C) avec un faible couple de freinage.
